# FASCICULE DE BREVET EUROPEEN

(11) **EP 0 952 015 B1**
(45) Date de publication et mention de la délivrance du brevet: **11.12.2002**
(21) Numéro de dépôt: 99107550.8
(22) Date de dépôt: 15.04.1999
(51) Int. Cl.: B60G 21/05, B60B 35/02

(54) **Essieu torsible**
Verdrehbare Verbundlenkerachse
Torsional axle

(30) Priorité: 22.04.1998 FR 9805138
(43) Date de publication de la demande: 27.10.1999
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Blondelet, Michel, 63540 Le Crest (FR); Jean, Philippe, 63110 Beaumont (FR)
(74) Mandataire: Bauvir, Jacques

(56) Documents cités:
- EP-A- 0 114 790
- DE-A- 19 533 479
- US-A- 3 419 101
- US-A- 4 787 680
- PATENT ABSTRACTS OF JAPAN vol. 018, no. 620 (M-1711), 25 novembre 1994 & JP 06 239121 A (SUZUKI MOTOR CORP), 30 août 1994
- PATENT ABSTRACTS OF JAPAN vol. 016, no. 576 (M-1345), 16 décembre 1992 & JP 04 224413 A (NISSAN MOTOR CO LTD), 13 août 1992

## Description

L'invention concerne les suspensions de véhicules. Plus particulièrement, l'invention est relative à un essieu reliant deux roues tout en comportant une fonction antiroulis (encore appelé fonction anti-devers). Plus spécifiquement encore, l'invention se rapporte à la catégorie d'essieux qui comportent deux bras de suspension dont une extrémité est destinée à supporter une roue, et dont l'autre extrémité est montée articulée sur la caisse du véhicule, et qui comportent en outre une traverse reliant les deux bras de suspension.

On connaît plusieurs variantes de ces essieux. La traverse est tantôt montée dans l'axe d'articulation des bras sur la caisse, tantôt montée à une position intermédiaire entre l'axe des fusées et l'axe des articulations des bras sur la caisse, tantôt montée dans l'axe des fusées, voire même montée légèrement au-delà des fusées, et ceci en coupant ou non une droite sécante à l'axe de la fusée et sécante à l'axe d'articulation, notamment selon les caractéristiques élastocinématiques que l'on veut donner à l'essieu. On rencontre couramment ce type d'essieu à l'arrière des voitures de tourisme. On sait que la position de la traverse, c'est à dire son éloignement par rapport à l'axe d'articulation à la caisse, détermine la cinématique de carrossage et de parallélisme, c'est à dire la variation du carrossage et du parallélisme en fonction de l'angle de roulis. A carrossage et pince initiales nulles, il n'y a aucune variation cinématique de carrossage et de parallélisme si l'axe de rotation relative des bras l'un par rapport à l'autre (c'est à dire en général l'axe de la traverse) est dans l'axe d'articulation à la caisse. Donc, le comportement du véhicule est influencé par la position de la traverse.

On ne traite pas ici des suspensions à roues indépendantes, qui dans leurs variantes à bras tirés, présentent parfois une sorte de traverse parfaitement rigide, c'est à dire indéformable sous l'effet des sollicitations de service. Une telle traverse est toujours disposée dans l'axe d'articulation des bras par rapport à la caisse, et les bras sont montés rotatifs par rapport à la traverse. Une telle traverse n'intervient pas dans les caractéristiques d'antiroulis de la suspension, l'essieu en question ne pouvant être qualifié de torsible.

L'invention concerne les essieux torsibles, c'est à dire déformables, et dont la déformation ou plus généralement la sollicitation en torsion de la traverse participe aux caractéristiques de raideur d'antiroulis du train de roues concerné. Dans ce cas, la traverse, prise globalement, subit une rotation relative de ses extrémités axiales, autour d'un axe transversal.

Une telle traverse est dimensionnée pour être très rigide en flexion. Elle participe au maintien rigoureux du plan de la roue lorsque le bras de suspension est lui-même sollicité en flexion et torsion par les transferts de charges dans le sens transversal. De telles sollicitations sont dues à l'adhérence transversale du pneumatique sur la chaussée et peuvent devenir très importantes en virages négociés à vive allure. Autrement dit, la traverse contribue à empêcher le braquage et la variation indésirable de carrossage de la roue, ou du moins contribue à les contrôler rigoureusement, pour qu'ils restent dans des limites acceptables, ou pour qu'ils soient contrôlés et non subis. Une telle traverse, si elle est conçue avec pour seul souci de contenir correctement le braquage et le carrossage des roues, présente une raideur propre en torsion trop élevée. C'est pourquoi on combat l'excès de raideur en torsion en général en adoptant une traverse à profil ouvert.

On connaît une autre solution pour rendre une telle traverse moins raide en torsion, tout en maintenant sa raideur en flexion à un niveau élevé. On consultera à ce sujet le brevet US 4 787 680. Malheureusement, une telle conception n'est satisfaisante que lorsque l'on dispose d'une longueur suffisante pour implanter la zone spécifique de la traverse dont la section est adaptée pour diminuer la raideur de torsion. En pratique, cela semble difficilement réalisable en dehors des très gros véhicules. En effet, l'implantation des bras de suspension, de leurs articulations sur la caisse, impose un encombrement transversal pratiquement indépendant de la taille du véhicule. Dès lors, l'espace disponible pour ladite zone spécifique diminue avec la voie du véhicule bien plus vite que proportionnellement.

Dans d'autres réalisations d'usage très courant, la traverse est formée par un profil ouvert, dont la raideur de torsion est bien plus faible. On constate cependant que la liaison d'une telle traverse aux bras pose de nombreux problèmes d'endurance. La zone de liaison est le siège d'une forte concentration de contrainte, ce qui conduit à la renforcer, par exemple en soudant des plaques de liaison additionnelles, ou en augmentant inertie aux extrémités de la traverse. Dans ce cas, la partie de la traverse réellement utilisée pour contrôler le roulis se réduit à une portion sensiblement comprise entre les plaques ou éléments additionnels de renfort.

C'est pourquoi, bien souvent, le guidage des roues (aspect géométrique) et le contrôle des mouvements de caisse (aspect flexibilité, débattement des roues en fonction des transferts de charges) sont traités séparément. Très couramment, une barre antiroulis séparée des organes de guidage de la ou des roues confère à l'essieu une résistance au roulis s'ajoutant à celle venant des ressorts de suspension et à celle venant d'une traverse rigidement liée aux bras de suspension.

On observe dans l'état actuel de la technique que le choix entre roues indépendantes et essieu torsible présente quelques difficultés mal résolues. Les compromis de caractéristiques torsion/flexion que cela impose sont difficiles à maîtriser.

Si l'on décide d'adopter un train de roues du type à essieu torsible plutôt qu'à roues indépendantes, la conception d'un tel essieu doit satisfaire des impératifs assez contradictoires. Il faut procurer à l'essieu une raideur suffisante en flexion, gage d'un bon maintien des plans de roues, dont on évite des braquages trop importants ou survenant dans un sens indésirable lors de sollicitations transversales importantes. Mais il faut en même temps que les bras de roue puissent débattre relativement indépendamment l'un de l'autre, tout en ayant de préférence un rappel élastique vers la position où les bras sont parallèles entre eux. C'est la fonction antiroulis propre à l'essieu dont on a parlé ci-dessus.

Dans la plupart des solutions d'essieu torsible connues, la traverse torsible, rigide en flexion, est reliée aux bras par encastrement, par exemple par soudure, pour assurer la tenue des roues.

Ce type d'essieu torsible se doit d'offrir, par exemple pour de petites berlines de tourisme, une rigidité suffisante en flexion (minimum 45000mN/rad/m pour un bras de 250mm de longueur entre l'axe d'articulation à la caisse et l'axe de la fusée sous efforts convergents) alliée à une aptitude suffisante à la déformation élastique en torsion (raideur comprise entre 250 et 500mN/rad/m pour un bras de longueur indiquée ci-dessus), les valeurs n'étant qu'indicatives et étant en fait fonction du véhicule, de la hauteur de son centre de gravité, de la voie, du type de comportement que le concepteur souhaite donner au véhicule.

Ces types de solutions présentent une grande difficulté en ce qui concerne le compromis et l'ajustement des raideurs de flexion par rapport aux raideurs de torsion. En effet les concentrations de contraintes au niveau de l'encastrement entre traverse et bras obligent, pour les maintenir à un niveau supportable, non seulement d'allonger les bras, en diminuant ainsi les angles de sollicitation à la torsion de la traverse, mais aussi obligent à renforcer l'encastrement par des renforts rapportés. Ces derniers augmentent artificiellement la raideur de torsion du profilé.

Un essieu torsible pour véhicule ayant les caractéristiques du préambule de la revendication 1 est décrit dans le document JP-A-04 224 413.

L'objectif de la présente invention est de mieux concilier ces impératifs contradictoires, c'est à dire de conférer à l'essieu une importante raideur à la flexion, tout en lui conférant une fonction antiroulis propre, dont on puisse ajuster le niveau aussi librement que possible, notamment de façon à permettre plus facilement l'utilisation d'un tel essieu sur une gamme très large de véhicules. En particulier, l'invention a pour objectif de rendre éventuellement superflue l'utilisation d'une barre antiroulis en conférant une fonction antiroulis indépendante de celle que procure les éléments de suspension de chacune des roues d'un essieu.

L'invention propose un essieu torsible pour véhicule, ledit essieu comportant deux bras tirés et une traverse transversale longiligne ayant un axe de traverse parallèle à la direction transversale, ladite traverse ayant à chacune de ses extrémités latérales un bord libre, lesdits bras étant reliés à chacune des extrémités de la traverse, lesdits bras étant destinés à être accrochés à la caisse chacun par une articulation à la caisse de façon à définir pour chacun un axe d'articulation des bras par rapport à la caisse, ladite articulation autorisant un désalignement desdits axes d'articulation l'un par rapport à l'autre, lesdits bras étant destinés à supporter chacun une roue, ladite traverse imposant un axe de torsion autour duquel les bras oscillent l'un par rapport à l'autre, la traverse étant reliée à chacun des bras à ses extrémités latérales par au moins trois moyens de liaison formant rotule et autorisant un gauchissement dudit bord libre.

Notons que l'on entend ici par direction "transversale" une direction parallèle à la largeur du véhicule, c'est à dire parallèle à la grande dimension de la traverse. L'axe de la traverse est parallèle à cette direction transversale. Dans le présent mémoire, on appelle "axe de torsion" un axe virtuel de l'essieu, sensiblement parallèle à l'axe de la traverse, autour duquel les bras de suspension présentent le débattement relatif spécifique d'une sollicitation lors de la prise de roulis du véhicule, ou plus généralement spécifique d'une sollicitation non identique des bras de suspension par exemple lorsqu'une seule roue franchit un obstacle en ligne droite. On entend par "rotule" un élément assurant une solidarisation de deux pièces tout en leur permettant de basculer en tous sens autour d'un centre de rotation relative, au moins pour des faibles angles de basculement relatif. On en connaît deux grandes familles. Il y a les "rotules mécaniques" qui sont axi-symétriques, permettent des angles relatifs assez grands, aucun jeu autre que le degré de liberté de basculement/rotation n'apparaissant entre les pièces reliées. Tout spécialement dans le domaine des suspensions d'automobiles, on connaît aussi les rotules élastomériques qui réalisent plutôt des pseudo-articulations présentant la caractéristique d'être sans frottement, contrairement aux premières, qui présente une certaine raideur, non infinie, de sorte qu'elles permettent, outre le basculement relatif visé, un certain jeu dans le positionnement relatif, le jeu étant fonction de ladite raideur, qui peut être non isotrope. On peut utiliser d'autres types de pseudo-articulations, comme une barre élancée avec un amincissement local pour définir le point d'articulation.

L'invention sera mieux comprise par la description qui va suivre, de différentes variantes et différents détails de réalisation d'un essieu arrière pour voitures de tourisme. Ces exemples sont donnés à titre non limitatif et sont illustrés par le dessin annexé sur lequel :
la figure 1 est montre une première variante de l'essieu,
la figure 2 est un détail d'une des liaisons entre traverse et bras,
la figure 3 est un détail d'une variante d'exécution d'une des liaisons entre traverse et bras,
la figure 4 est un détail d'une variante d'exécution d'une des liaisons entre traverse et bras,
la figure 5 est montre une deuxième variante de réalisation,
la figure 6 illustre l'implantation des moyens de liaison entre traverse et bras,
la figure 7 est une vue schématique, de côté, d'une autre variante de l'essieu,
la figure 8 illustre une autre variante d'une traverse,
les figures 9A et 9B illustrent la fabrication d'une autre variante de traverse,
les figures 10A et 10B illustrent la déformation en torsion d'un essieu selon l'invention,
les figures 11A et 11B illustrent la déformation en torsion d'un essieu selon l'art antérieur.

Aux différentes figures, on utilise les mêmes références pour désigner des pièces similaires ou bien remplissant sensiblement la même fonction. Les références complétées d'un suffixe "-x" lorsque l'on vise de façon générique tous les modes de réalisation, et peuvent être complétées d'un suffixe "-A" ou "-B" ou "C" (etc..) lorsque l'on vise plus spécifiquement l'un ou l'autre des modes de réalisation.

On aperçoit un essieu 1x arrière, à bras 2 tirés et reliés à une traverse 3x. Chaque bras de suspension 2 est relié à la caisse par une articulation 4 formant une liaison élastique. Cette articulation, qui est en soit bien connue, définit pour chaque bras un axe d'articulation L₁, L₂ (c'est à dire un axe de débattement du bras 2 considéré par rapport à la caisse). Afin de permettre les déformations qu'impose la torsion de l'essieu, ces articulations doivent permettre un désalignement des axes d'articulation L₁ et L₂. Des articulations en élastomère conviennent tout particulièrement bien. Les bras de suspension 4 portent une fusée du côté opposé à la liaison à la caisse. Chaque fusée est destinée à recevoir une roue 5. La traverse 3x remplit une fonction antiroulis.

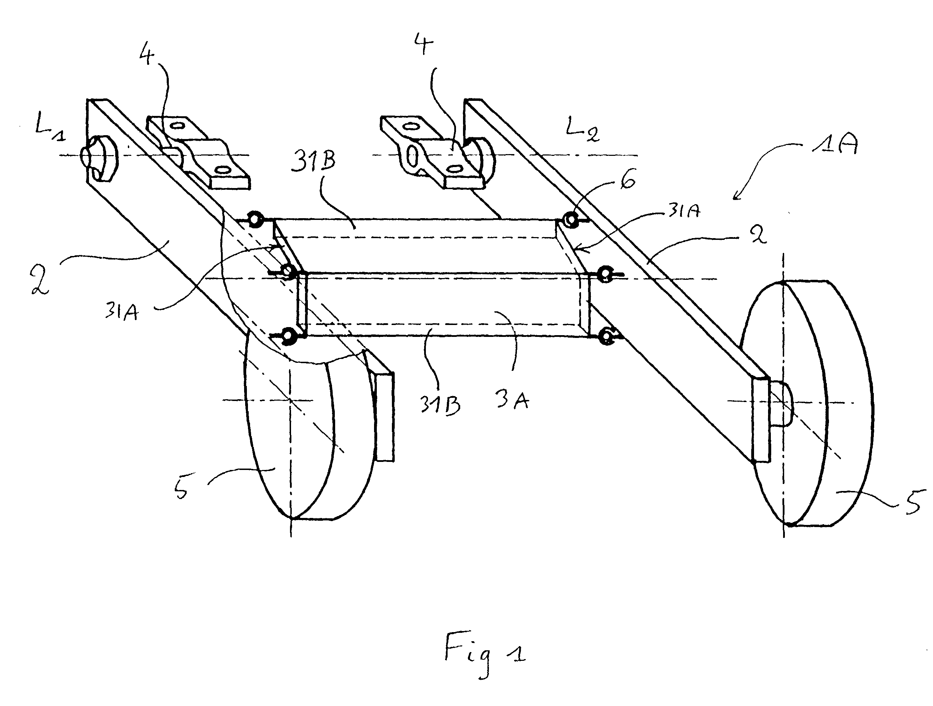

La liaison de la traverse à chacun des bras de suspension est assurée par des moyens de liaison 6x formant des rotules. A la figure 1, on voit trois rotules 6 de part et d'autre d'une traverse 3 en "V", chacune des rotules étant située aux extrémités du V et au centre de celui-ci.

Grâce aux rotules, un gauchissement de la traverse est possible. Les pièces d'accouplement (ici en élastomère) ont pour rôle de s'affranchir du problème de concentration de contraintes évoqué ci-dessus, en autorisant un déplacement relatif de l'extrémité de la traverse et du bras. Notamment, les pièces d'accouplement autorisent un glissement relatif des bords 31B du profil dans le cas d'une poutre constituée par un profil ouvert. Le gauchissement autorisé et contrôlé par les rotules contribue à améliorer grandement l'endurance de la liaison de la traverse aux bras, par rapport aux encastrements couramment rencontrés, qui nécessitent d'ailleurs souvent d'addition de pièces de renfort 99 (voir l'essieu 9 représentant l'état de la technique aux figures 11A et 11B) au droit de l'encastrement, notamment pour les traverses très décalées par rapport à l'axe d'articulation de l'essieu sur la caisse.

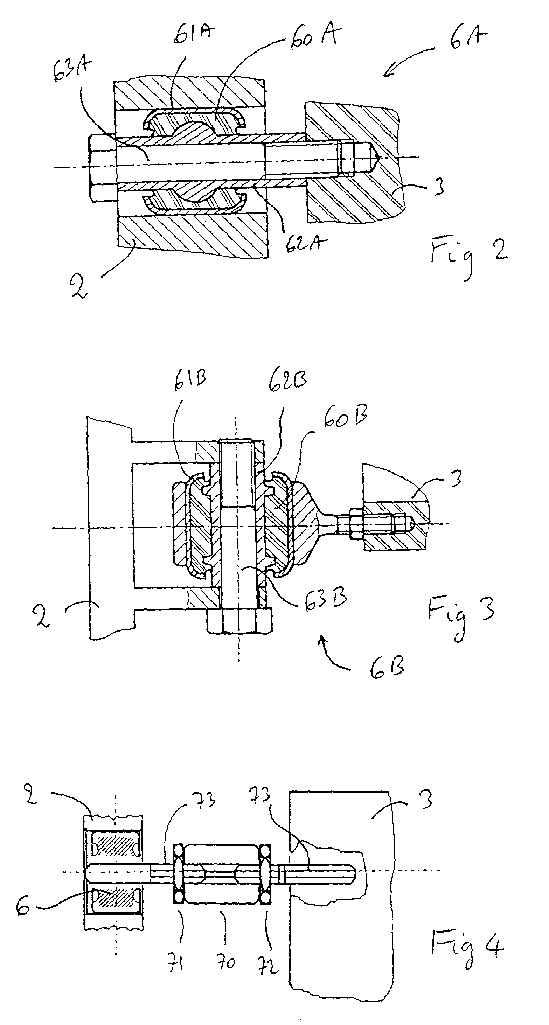

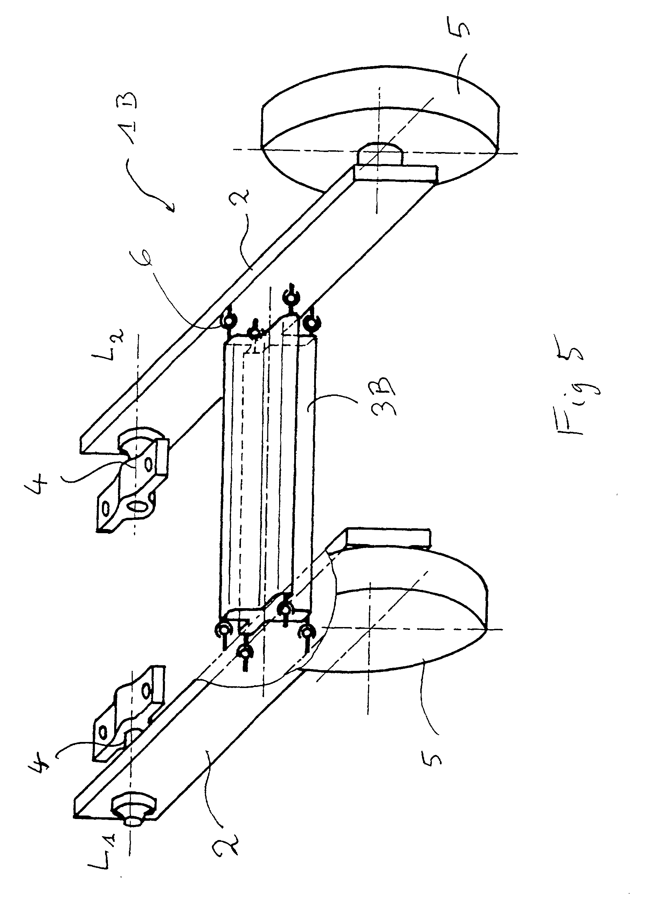

Dans un exemple illustrant la présente invention, les rotules 6x sont de type sans frottement ; ce sont des pièces d'accouplement dont le degré de liberté est procuré par de l'élastomère. Outre l'absence de frottement, ce type de rotule présente l'avantage de pouvoir moduler la raideur de l'élastomère, donc la raideur s'opposant au mouvement relatif des pièces accouplées. Les figures 2 et 3 illustrent en détail deux variantes. Aux figures 2 et 3, on voit des bagues en élastomère 60A, 60B (ici des pièces de révolution) adhérisées sur des viroles métalliques 61A, 61B et 62A, 62B, par exemple au moment de la vulcanisation des bagues en élastomère. Les variantes se distinguent essentiellement par l'orientation de l'axe central 63A, 63B des rotules 6A, 6B par rapport à l'axe de la traverse 3x : la rotule 6A est montée à axe 63A parallèle à l'axe de la traverse 3, alors que la rotule 6B est montée à axe 63B perpendiculaire à l'axe de la traverse 3. Le choix de l'un ou de l'autre des positions dépend des caractéristiques résistance et de raideur que l'on veut conférer et influence le contrôle de l'attitude du plan de roue, comme cela sera mieux compris dans la suite.

A la figure 4, on voit que le moyens de liaison 6 est monté sur la traverse par deux tiges filetées 73 à pas contraires, reliées par un manchon 70 et des écrous de blocage 71, 72. Ainsi, on peut réaliser un essieu dont au moins un des moyens de liaison d'au moins un des côtés est monté par l'intermédiaire d'un moyen de réglage pour régler le positionnement relatif dans le sens transversal du ou des bras par rapport à la traverse, de façon à pouvoir régler l'attitude du plan de chaque roue. Le réglage s'effectue de la même manière que ce qui est bien connu par exemple pour régler des biellettes de direction.

Les articulations en élastomère peuvent être de raideurs variables selon leurs directions appartenant à un plan perpendiculaire à l'axe de la traverse. Il suffit par exemple de mouler des cavités à l'intérieur de l'élastomère, les différents moyens adéquats étant bien connus de l'homme du métier.

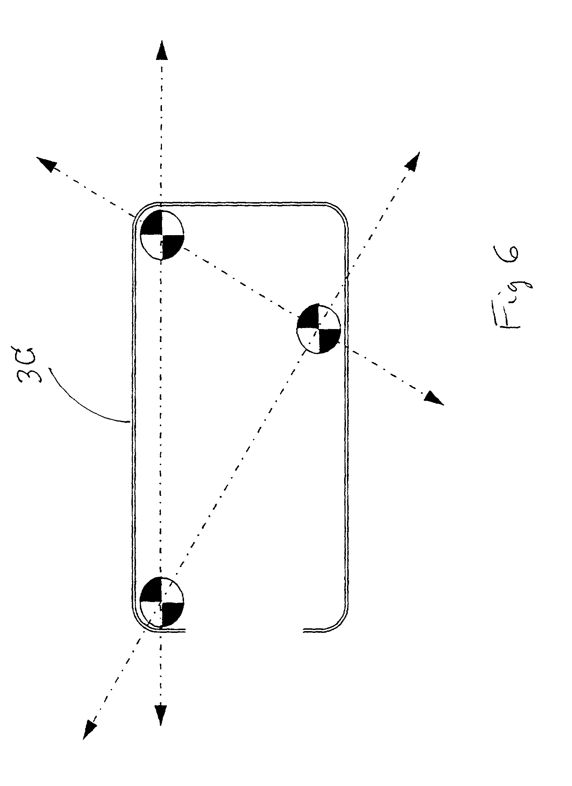

A la figure 5, on voit une traverse 3B formée essentiellement par un profil en croix. On peut la relier aux bras de chaque côté par exemple par trois rotules 6B et par une rotule 6A. Ce type de traverse, dont le profil est fermé, gauchit sous l'effet d'une torsion. On utilise ce type de traverse lorsque l'on cherche avant tout à alléger l'essieu, sans rechercher des variations importantes du plan de roue.

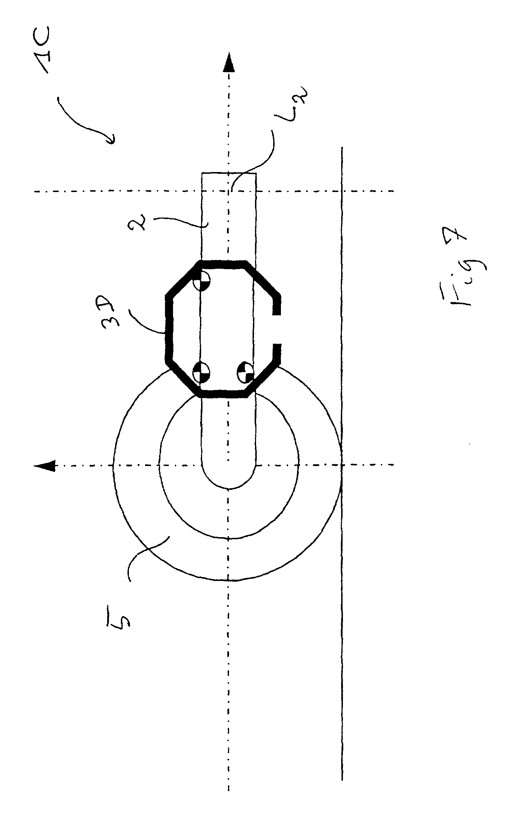

Suivant un aspect de la présente invention, illustré à l'aide de la figure 6, lesdites articulations en élastomère sont orientées de manière à laisser se déplacer, à moindre contrainte, leurs axes les uns par rapport aux autres selon des directions matérialisées par les droites les reliant dans un plan perpendiculaire à l'axe de la traverse. Si l'on adopte une articulation de type 6B, son axe 63B sera disposé de préférence suivant une droite représentée en traits d'axe à la figure 6. Si l'on adopte une articulation de type 6A, alors elle est de préférence non isotrope, sa direction de faible raideur radiale (radiale étant considéré par rapport à l'axe 63A) étant disposé de préférence suivant une droite représentée en traits d'axe à la figure 6. C'est de cette façon que l'on obtient des gauchissements tout particulièrement avantageux du bord libre de la traverse.

On voit que les traverses 3A, 3C, 3D, 3E et 3F sont formées essentiellement par un profil ouvert, de sorte que chacune de ces traverses, vue dans un plan perpendiculaire à son axe, présente une fente imposant un azimut prédéterminé, autour de son axe, dans la liaison de ladite traverse auxdits bras. L'orientation de la traverse et la position relative des rotules, par rapport à la traverse et aux bras, sont choisies expérimentalement de façon à ajuster l'ampleur de la variation de carrossage (variation du plan de la roue) résultant du gauchissement à la suite de la torsion de la traverse.

On a constaté que, selon l'une des possibilités, pour que le pneumatique reste sensiblement perpendiculaire au sol, il est avantageux, en considérant les orientations vers l'avant et vers l'arrière du véhicule, ainsi que vers le sol et vers le haut du véhicule, d'orienter la fente vers le sol et disposer deux moyens de liaison en haut, un moyen de liaison étant disposé vers le sol et vers l'arrière. C'est ce qui est représenté à la figure 7.

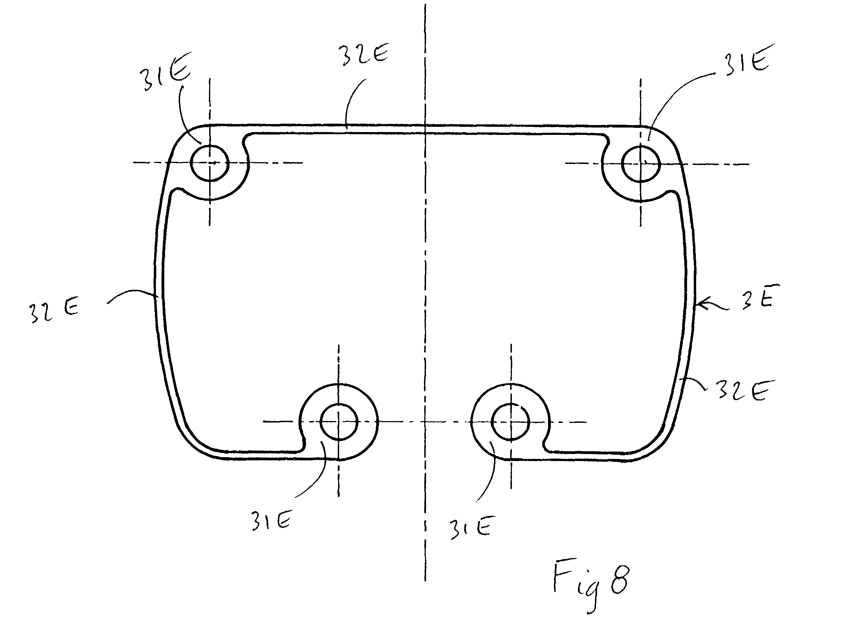

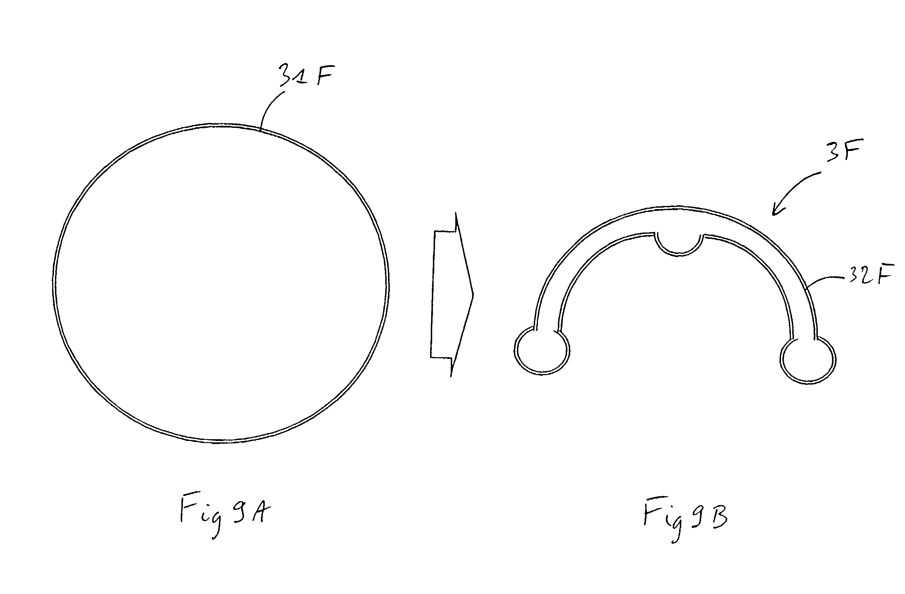

A la figure 8, on voit un profilé ouvert 3E constitué de plusieurs profils fermés reliés entre eux par des âmes 32E. Il est intéressant de réaliser une telle traverse en aluminium filé. A la figure 9A, on voit que l'on peut partir d'un tube 31F, de le déformer de toute manière convenable pour l'aplatir et créer ainsi un profilé ouvert 3F convenable.

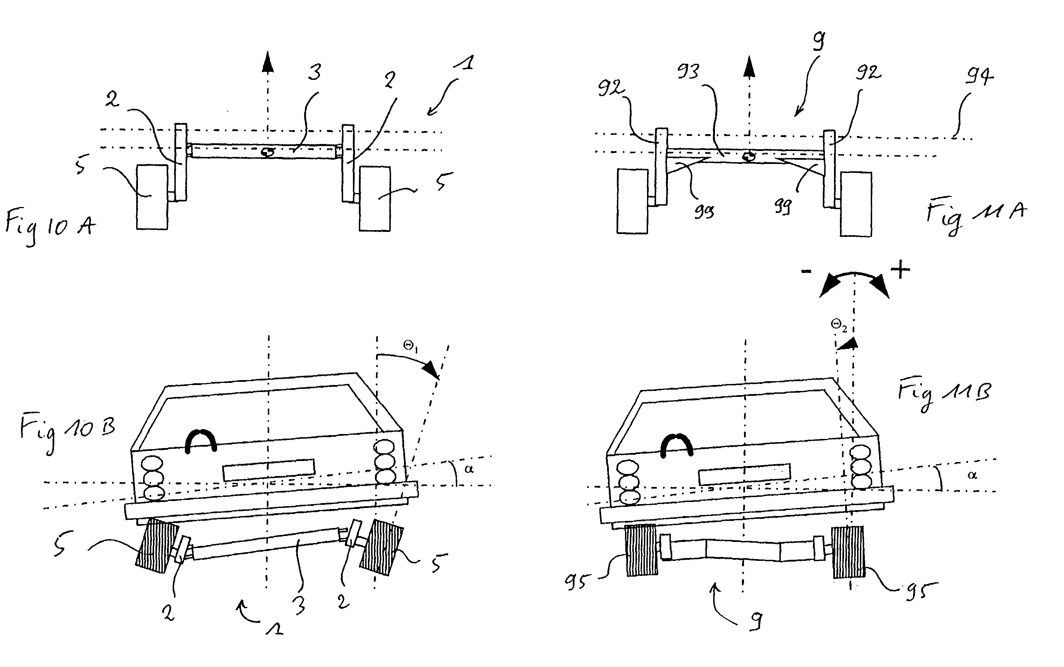

De préférence, si l'on veut en particulier agir sur le contrôle du plan de la roue, c'est à dire contrôler le carrossage de la roue par rapport au sol, la traverse est décalée par rapport aux rotules de liaison des bras à la caisse. C'est ce qui est représenté notamment aux figures 10 et 11. Notons que, dans ce cas, les bras 2 sont destinés à être accrochés à la caisse chacun par une articulation 4 à la caisse qui autorise un désalignement desdits axes d'articulation l'un par rapport à l'autre. Les figures 11A et 11B montre un essieu selon l'état de la technique, vu en plan à la figure 11A, la flèche à la figure 11A pointant vers l'avant du véhicule. Selon le décalage de la traverse 93 par rapport à l'axe 94 de liaison à la caisse, il peut en résulter une évolution du plan de roue θ₂, due à la torsion de la traverse 93 provoquée par une prise de roulis α. Cependant, cela ne suffit jamais pour empêcher les plans de roue de s'incliner vers l'extérieur du virage, donc dans un sens défavorable au travail du pneumatique. C'est ce que l'on voit à la figure 11B, qui montre que les roues 95 s'inclinent vers l'extérieur du virage.

Aux figures 10, on a représenté le fonctionnement d'un essieu selon l'invention lors d'une sollicitation comparable. Pour une traverse de type 3E, dont la fente et la liaison sont disposés comme représenté à la figure 7, on obtient une évolution de θ₁ de bien plus grande ampleur et en sens opposé par rapport à ce que l'on obtient pour θ₂ (voir figures 11) pour un même angle α. Cela permet de corriger la position du plan de roue 5 pour maintenir un carrossage nul à tous moments. Il est même possible d'obtenir des inclinaisons vers l'intérieur du virage, comme représenté à la figure 10B. L'invention permet aux pneus de fonctionner dans une configuration beaucoup plus favorable. Ainsi, en utilisant une traverse dont le profil est ouvert, on peut choisir l'orientation de la traverse et la position des rotules reliant la traverse aux bras de façon à augmenter la variation de carrossage par rapport à un référentiel lié à la traverse, par rapport à ce que l'on obtient avec un essieu torsible directement comparable et tel que connu dans l'art antérieur.

On vient d'expliquer les avantages de l'invention dans une application on l'on recherche principalement le contrôle du plan de roue. Les effets sont d'autant plus grands que la traverse est d'autant plus décalée par rapport à l'axe d'articulation des bras par rapport à la caisse (essieu torsible en H). Mais l'invention est aussi intéressante pour d'autres applications, par exemple lorsque que l'on recherche des gains de poids d'un essieu. On peut plus facilement que dans le cas habituel des encastrements, et quelle que soit la matière adoptée pour la traverse, dessiner une traverse dont la forme de la section permet d'obtenir les propriétés en torsion et flexion que l'on recherche. Dans cette optique, l'invention est également intéressante pour des traverses décalées ou non-décalées (essieu torsible en U, dans lequel l'axe de la traverse est sensiblement confondu avec l'axe d'articulation des bras par rapport à la caisse).

Un avantage de l'invention tient au fait qu'elle autorise de plus grands angles de débattement d'un bras par rapport à l'autre, parce qu'elle autorise de plus grandes torsion de la traverse sans poser de problèmes d'encastrement. Dès lors, à course donnée du mouvement de suspension des roues par rapport à la caisse d'un véhicule, les bras de suspension peuvent être plus courts, bien plus courts que ce que l'on rencontre couramment dans le cas d'essieux torsible. On peut adopter en général la même longueur de bras que ce que l'on rencontre dans les suspensions à roues indépendantes et bras tirés.

En réalisant à l'interface entre la traverse et les bras au moins trois liaisons du type rotule, on évite avantageusement les concentrations de contraintes et on peut utiliser, en particulier, le gauchissement de la géométrie du profilé pour augmenter, de manière linéaire ou non, la raideur de torsion intrinsèque du profilé. La raideur de flexion, elle, ne dépend que de la structure du profilé ; elle se trouve être découplée de la torsion d'une façon bien plus avantageuse. Pour la traverse, on peut utiliser un profilé tubulaire, à épaisseur constante ou non, de type ouvert ou fermé et, de par la géométrie du profil, on maîtrise les raideurs de torsion et de flexion comme souhaitées, alors que dans l'état de la technique lesdites raideurs de torsion et de flexion dépendent aussi de la présence des renforts à l'encastrement. Les rotules peuvent être soit de type mécanique soit de type articulation élastique. Leurs positions peuvent également contribuer à l'élasto-cinématique des plans de roues. Dans le cas d'articulations élastiques, les raideurs peuvent être ajustées pour obtenir des effets non-linéaires avantageux.

De plus, l'élimination de moment fléchissant à la liaison entre traverse et bras, du fait des rotules, permet une réduction importante des concentrations de contraintes et facilite l'utilisation de bras plus courts, réduisant d'autant l'encombrement de l'essieu et sa masse. La répartition des contraintes sur toute la longueur du profilé autorise également l'utilisation de matériaux autres que l'acier (alliages légers, composites, ...) pour réduire encore la masse de l'ensemble. On peut par exemple utiliser le filage de l'aluminium qui permet d'obtenir avantageusement de multiples formes et une répartition de matière optimisée.

La raideur torsionnelle intrinsèque du profilé ouvert ou fermé peut être modifiée et ajustée par ses caractéristiques de section et de longueur, par le choix du matériau. Beaucoup de formes différentes sont envisageables pour le profil de la traverse. On a illustré l'invention par un profilé en V, un profilé en U, un profilé en croix, un profilé en C. On peut utiliser un cylindre fermé, de faible épaisseur par rapport à l'encombrement de sa courbe génératrice plane. La raideur torsionnelle du profilé tubulaire ouvert ou fermé peut aussi être modifiée et ajustée par le choix judicieux de la raideur d'une ou de plusieurs des rotules de liaison entre la traverse et les bras. Les raideurs des rotules peuvent être non-linéaires dans le but d'avoir une élasto-cinématique des plans de roues non-linéaire. Cette non-linéarité des raideurs peut être obtenue par les choix géométriques, les facteurs de forme, les modules des matériaux. L'emplacement de l'implantation des rotules sur le profilé tubulaire ouvert ou fermé a aussi une influence sur l'élasto-cinématique des plans de roues et offre aussi au concepteur une possibilité d'ajuster les caractéristiques de l'essieu.

Grâce à l'invention, le plan des bras de roue, les variations d'attitude de celui-ci en fonction des contraintes dynamiques, peuvent être correctement maîtrisés, ce qui permet de faire braquer et/ou d'incliner (angle de carrossage) le plan des roues arrières vers l'intérieur du virage, en choisissant correctement l'implantation des rotules et le positionnement du profil de la traverse par rapport au bras de suspension.

L'invention trouve application en particulier comme train arrière d'un véhicule de tourisme. Mais elle peut trouver des applications plus largement dans toute catégorie de véhicule car on peut régler sélectivement et séparément les caractéristiques de torsion recherchées et la précision de guidage des plans de roue.

## Revendications

1. Essieu (1A, 1B, 1C) torsible pour véhicule, ledit essieu (1A, 1B, 1C) comportant deux bras (2) tirés et une traverse (3A, 3B, 3C, 3D, 3E, 3F) transversale longiligne ayant un axe de traverse parallèle à la direction transversale, ladite traverse (3A, 3B, 3C, 3D, 3E, 3F) ayant à chacune de ses extrémités latérales un bord libre (31A, 31B, 31E, 31F), lesdits bras (2) étant reliés à chacune des extrémités de la traverse, lesdits bras (2) étant destinés à être accrochés à la caisse chacun par une articulation (4) à la caisse de façon à définir pour chacun un axe d'articulation (L₁, L₂) des bras par rapport à la caisse, lesdits bras (2) étant destinés à supporter chacun une roue (5), ladite traverse (3A, 3B, 3C, 3D, 3E, 3F) imposant un axe de torsion autour duquel les bras (2) oscillent l'un par rapport à l'autre **caractérisé en ce que**, la traverse (3A, 3B, 3C, 3D, 3E, 3F) est reliée à chacun des bras (2) à ses extrémités latérales par au moins trois moyens de liaison formant rotule (6, 6A, 6B) et autorisant un gauchissement dudit bord libre.

2. Essieu selon la revendication 1, **caractérisé en ce** lesdits moyens de liaison comprennent des rotules mécaniques.

3. Essieu selon la revendication 1, **caractérisé en ce que** lesdits moyens de liaison (6, 6A, 6B) comprennent des rotules de type sans frottement, à base d'articulations en élastomère.

4. Essieu selon la revendication 3, **caractérisé en ce que** lesdites articulations en élastomère sont de raideurs variables selon leurs directions appartenant à un plan perpendiculaire à l'axe de la traverse (3A, 3B, 3C, 3D, 3E, 3F).

5. Essieu selon l'une des revendications 3 ou 4, **caractérisé en ce que** lesdites articulations en élastomère sont orientées de manière à laisser se déplacer, à moindre contrainte, leurs axes les uns par rapport aux autres selon des directions matérialisées par les droites les reliant dans un plan perpendiculaire à l'axe de la traverse (3A, 3B, 3C, 3D, 3E, 3F).

6. Essieu selon l'une des revendications 1 à 5, **caractérisé en ce qu'**au moins un des moyens de liaison d'au moins un des côtés est monté par l'intermédiaire d'un moyen de réglage (70, 71, 72, 73) pour régler le positionnement relatif dans le sens transversal du ou des bras par rapport à la traverse (3A, 3B, 3C, 3D, 3E, 3F), de façon à pouvoir régler l'attitude du plan de chaque roue (5).

7. Essieu selon l'une des revendications 1 à 6, **caractérisé en ce que** la traverse (3A, 3B, 3C, 3D, 3E, 3F) est formée essentiellement par un profil ouvert (4) de sorte que ladite traverse, vue dans un plan perpendiculaire à son axe, présente une fente imposant un azimut prédéterminé de la traverse (3A, 3B, 3C, 3D, 3E, 3F), autour de son axe dans la liaison de ladite traverse (3A, 3B, 3C, 3D, 3E, 3F) auxdits bras.

8. Essieu selon la revendication 7 dans lequel, en considérant les orientations vers l'avant et vers l'arrière du véhicule, ainsi que vers le sol et vers le haut du véhicule, la fente est orientée vers le sol, deux moyens de liaison sont disposés en haut, un moyen de liaison est disposé vers le sol et vers l'arrière.

9. Essieu selon l'une des revendications 1 à 8, **caractérisé en ce que** le profilé ouvert (3E) est constitué de plusieurs profils fermés reliés entre eux.

10. Essieu selon la revendication 1 à 8, **caractérisé en ce que** le profilé ouvert (3F) est constitué à partir d'un tube aplati et déformé.

11. Essieu selon l'une des revendications 1 à 10, **caractérisé en ce que** la traverse (3A, 3B, 3C, 3D, 3E, 3F) est décalée par rapport aux articulations des bras à la caisse.

## Patentansprüche

1. Verwindbare Achse (1A, 1B, 1C) für ein Fahrzeug, wobei die genannte Achse (1A, 1B, 1C) zwei gezogene Arme (2) und eine langgliedrige Traverse (3A, 3B, 3C, 3D, 3E, 3F) aufweist, die eine zur Querrichtung parallele Traversenachse aufweist, die genannte Traverse (3A, 3B, 3C, 3D, 3E, 3F) an jeder ihrer seitlichen Enden einen freien Rand (31A, 31B, 31E, 31F) hat, die genannten Arme (2) dazu bestimmt sind, jeweils an den Aufbau durch eine Anlenkung (4) am Aufbau angekoppelt zu werden, um auf diese Weise für jeden eine Anlenkungsachse (L₁, L₂) der Arme bezüglich des Aufbaus zu definieren, und die genannten Arme (2) jeweils dazu bestimmt sind, ein Rad (5) zu tragen, die genannte Traverse (3A, 3B, 3C, 3D, 3E, 3F) eine Torsionsachse festlegt, rund um welche die Arme (2) zueinander oszillieren, **dadurch gekennzeichnet, daß** die Traverse (3A, 3B, 3C, 3D, 3E, 3F) an jedem der Arme (2) mit ihren seitlichen Enden durch mindestens drei Verbindungsmittel angebracht ist, die ein Gelenk (6, 6A, 6B) bilden und eine Schrägstellung des genannten freien Randes gestatten.

2. Achse nach Anspruch 1, **dadurch gekennzeichnet, daß** die genannten Verbindungsmittel mechanische Gelenke aufweisen.

3. Achse nach Anspruch 1, **dadurch gekennzeichnet, daß** die genannten Verbindungsmittel (6, 6A, 6B) der Art nach reibungslose Gelenke auf der Grundlage von Elastomer-Anlenkungen aufweisen.

4. Achse nach Anspruch 3, **dadurch gekennzeichnet, daß** die genannten Elastomer-Anlenkungen entsprechend ihren Richtungen, die zu einer Ebene senkrecht zur Achse der Traverse (3A, 3B, 3C, 3D, 3E, 3F) gehören, variable Steifigkeiten aufweisen.

5. Achse nach einem der Ansprüche 3 oder 4, **dadurch gekennzeichnet, daß** die genannten Elastomer-Anlenkungen derart orientiert sind, daß sie mit geringerer Spannung ihre Achsen längs Richtungen versetzen lassen, die durch die Geraden gebildet sind, die sie in einer zur Achse der Traverse (3A, 3B, 3C, 3D, 3E, 3F) senkrechten Ebene verbinden.

6. Achse nach einem der Ansprüche 1 bis 5, **dadurch gekennzeichnet, daß** mindestens eines der Verbindungsmittel mindestens einer der Seiten mittels eines Regulierungsmittels (70, 71, 72, 73) angebracht ist, um die relative Positionierung in Querrichtung des Armes oder der Arme in Bezug auf die Traverse (3A, 3B, 3C, 3D, 3E, 3F) derart zu regulieren, daß man die Anordnung der Ebene eines jeden Rades (5) einregulieren kann.

7. Achse nach einem der Ansprüche 1 bis 6, **dadurch gekennzeichnet, daß** die Traverse (3A, 3B, 3C, 3D, 3E, 3F) im wesentlichen aus einem offenen Profil (4) derart gebildet ist, daß die genannte Traverse, in einer Ebene senkrecht zu ihrer Achse gesehen, einen Schlitz aufweist, der einen bestimmten Azimut der Traverse (3A, 3B, 3C, 3D, 3E, 3F) rund um ihre Achse der Verbindung der genannten Traverse (3A, 3B, 3C, 3D, 3E, 3F) mit den genannten Armen festlegt.

8. Achse nach Anspruch 7, worin, wenn man die Ausrichtungen nach vom und nach hinten bezüglich des Fahrzeuges in Betracht zieht, sowie zum Boden und nach oben bezüglich des Fahrzeuges, der Schlitz dem Boden zugewandt ist, zwei Verbindungsmittel oben angeordnet sind und ein Verbindungsmittel zum Boden und nach hinten angeordnet ist.

9. Achse nach einem der Ansprüche 1 bis 8, **dadurch gekennzeichnet, daß** das offene Profil (3E) aus mehreren Profilen gebildet ist, die miteinander verbunden sind.

10. Achse nach einem der Ansprüche 1 bis 8, **dadurch gekennzeichnet, daß** das offene Profil (3F) aus einem abgeflachten und verformten Rohr gebildet ist.

11. Achse nach einem der Ansprüche 1 bis 10, **dadurch gekennzeichnet, daß** die Traverse (3A, 3B, 3C, 3D, 3E, 3F), bezogen auf die Anlenkungen der Arme an den Aufbau, versetzt ist.

## Claims

1. A torsion axle (1A, 1B, 1C) for a vehicle, said axle (1A, 1B, 1C) comprising two trailing arms (2) and an elongate transverse cross member (3A, 3B, 3C, 3D, 3E, 3F) having a cross-member axis parallel to the transverse direction, said cross member (3A, 3B, 3C, 3D, 3E, 3F) having a free edge (31A, 31B, 31E, 31F) at each of its lateral ends, said arms (2) being connected to each of the ends of the cross member, each of said arms (2) being designed to be attached to the body of the vehicle by an articulation (4) to the body, so as to define for each arm an axis (L₁, L₂) for coupling the arms on the body, each of said arms (2) being designed to support a wheel (5), said cross member (3A, 3B, 3C, 3D, 3E, 3F) providing a torsion axis around which the arms (2) swing in relation to each other, **characterised in that** the cross member (3A, 3B, 3C, 3D, 3E, 3F) is connected to each of the arms (2) at its lateral ends by at least three link means forming ball joints (6, 6A, 6B) and allowing twisting of said free edge.

2. An axle according to Claim 1, **characterised in that** said link means comprise mechanical ball joints.

3. An axle according to Claim 1, **characterised in that** said link means (6, 6A, 6B) comprise ball joints of friction-free type, based on elastomer joints.

4. An axle according to Claim 3, **characterised in that** said elastomer joints are of variable rigidity, depending on their directions relative to a plane perpendicular to the axis of the cross member (3A, 3B, 3C, 3D, 3E, 3F).

5. An axle according to one of Claims 3 or 4, **characterised in that** said elastomer joints are oriented so as to let their axes be moved with least stress relative to one another in directions marked by the straight lines connecting them in a plane perpendicular to the axis of the cross member (3A, 3B, 3C, 3D, 3E, 3F).

6. An axle according to one of Claims 1 to 5, **characterised in that** at least one of the link means on at least one of the sides is mounted by means of an adjustment means (70, 71, 72, 73) for regulating the relative crosswise positioning of the arm or arms on the cross member (3A, 3B, 3C, 3D, 3E, 3F), so as to be able to regulate the orientation of the plane of each wheel (5).

7. An axle according to one of Claims 1 to 6, **characterised in that** the cross member (3A, 3B, 3C, 3D, 3E, 3F) is formed essentially by an open section (4), so that said cross member, seen in a plane perpendicular to its axis, presents a slit requiring a predetermined azimuth of the cross member (3A, 3B, 3C, 3D, 3E, 3F) about its axis in the linkage of said cross member (3A, 3B, 3C, 3D, 3E, 3F) to said arms.

8. An axle according to Claim 7, in which, considering the orientation towards the front and towards the rear of the vehicle, as well as towards the ground and towards the top of the vehicle, the slit is directed towards the ground, and two link means are located on the top, one link means is located towards the ground and towards the rear.

9. An axle according to one of Claims 1 to 7, **characterised in that** the open section (3E) is made from several closed sections connected together.

10. An axle according to Claims 1 to 8, **characterised in that** the open section (3F) is made from a flattened, deformed tube.

11. An axle according to one of Claims 1 to 10, **characterised in that** the cross member (3A, 3B, 3C, 3D, 3E, 3F) is offset from the joints connecting the arms on the body.
